# EUROPEAN PATENT APPLICATION

(11) **EP 4 721 834 A1**
(43) Date of publication of application: **08.04.2026**
(21) Application number: 24204808.0
(22) Date of filing: 04.10.2024
(51) Int. Cl.: B01D 39/16

(54) **NON-WOVEN FILTER MEDIA WITH AN ACRYLIC & PP FIBER LAYER AND A NANOFIBER LAYER**

(71) Applicant: Neenah Gessner GmbH, 83052 Bruckmühl (DE)
(72) Inventor: GEISBERGER, Georg, 83052 Bruckmühl (DE); FRITZ, Ellen, 83052 Bruckmühl (DE)
(74) Representative: Plasseraud IP

(57) **Abstract**

A non-woven filter media (100) comprising a first layer (102) including a blend of acrylic fibers and polypropylene, PP, fibers, a second layer (104), and a third layer (106) arranged between the first layer (102) and the second layer (104), the third layer (106) being made of electrospun nanofibers.

## Description

### Technical Field

This disclosure pertains to the field of filtration. More specifically, it relates to non-woven filter media, in particular non-woven air filter media, as may be used in heating, ventilation & air conditioning filters, i.e., HVAC filters. A particular application is in HVAC bag filters.

### Background Art

Ideally, filters should have a high filtration efficiency, a low pressure drop and a high dirt holding capacity.

The relevant standards for filtration efficiency are ISO Standard 16890-1 :2016 and ASHRAE Standard 52.2 with App. J. According to the ISO standard, air filters are classified in one of three PM classes or a coarse class depending on their filtration efficiency. An air filter with a very good filtration efficiency is classified in the highest class, namely the ePM1 class.

An air filter with a low pressure drop limits the power consumption of the associated fan that provides the airflow through the air filter. Accordingly, an air filter with a low pressure drop will have a high energy efficiency ranking, as defined for example by Recommendation Eurovent 4/21-2016.

The dirt/dust holding capacity, DHC, usually is defined for a given filter media by the amount of test dirt that is retained by the filter media. Often, the DHC is prorated to area of filter media and reported as g/m² of filter media. The relevant standard for the determination of the DHC is DIN 71460-1 :2006.

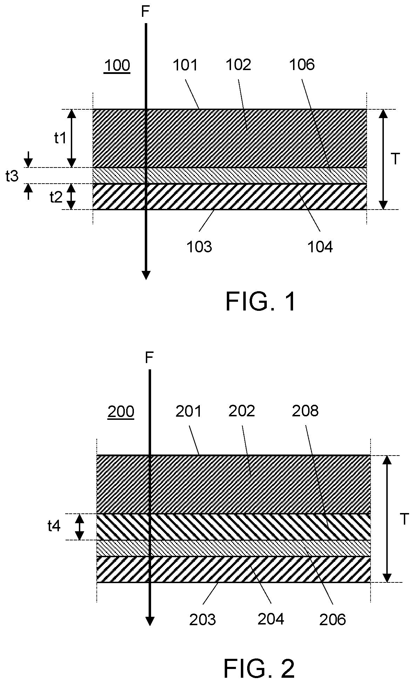

In its Figs. 2 and 10 and the corresponding description, document US 2010/0181249 A1 discloses a non-woven three-layer filter media 200 with a melt-blown layer 202, an electrospun nanofiber layer 204 and a scrim layer 206. The filter media 200 is said to have a high filtration efficiency, a high dust holding capacity and an improved lifespan.

However, there is still a need for further improvements on the filtration efficiency, dust holding capacity, lifespan and/or pressure drop of non-woven filter media.

### Summary

In view of the above, it is an object of the present disclosure to provide a non-woven filter media combining a very good filtration efficiency with a low pressure drop and a good dust holding capacity.

According to the present disclosure, this object is achieved with a non-woven filter media comprising a first layer comprising a blend of acrylic fibers and polypropylene, PP, fibers; a second layer; and a third layer made of electrospun nanofibers.

Indeed, the present inventors have found out that the combination of an electrospun nanofiber layer with another layer comprising a blend of acrylic fibers and polypropylene fibers leads to a high-end non-woven filter media.

The electrospun nanofiber layer shows an excellent filtration efficiency at a low pressure drop. The other layer comprising a blend of acrylic fibers and polypropylene fibers ensures a good dust holding capacity and leads to an increased lifetime and lower energy consumption.

The following features can be optionally implemented, separately or in combination one with the others:
- the third layer is arranged between the first layer and the second layer;
- the second layer is arranged between the first layer and the third layer;
- the first layer is a carded layer and/or electrostatically charged layer;
- the first layer is a pre-filter layer;
- the acrylic fibers to PP fibers mass ratio of the blend is 40:60 to 60:40, preferably 45:55 to 55:45, for example 50:50;
- the acrylic fibers are polyacrylonitrile, PAN, fibers;
- the blend further comprises a charge additive, wherein the charge additive is present in the PP fibers;
- the blend further comprises a spin finish, wherein the spin finish is present on the acrylic fibers;
- at least a part of the acrylic fibers has a dog-bone-shaped cross-section and/or at least a part of the acrylic fibers has a kidney-bean-shaped cross-section;
- the thickness of the first layer is in the range of 1 to 2.5 mm;
- the air permeability of the first layer is in the range of 2,000 to 4,000 l/(m²s);
- the basis weight of the first layer is in the range of 30 to 200 g/m²;
- the nanofibers are at least one of the following: polyamide, PA, fibers; polyester fibers, such as polyethylene terephthalate, PET, fibers; polyvinyl chloride, PVC, fibers; polyolefin fibers; polyvinyl alcohol, PVAL, fibers; polyvinylidene fluoride fibers; and polyurethane, PUR, fibers;
- the third layer is a filter layer;
- the thickness of the third layer is in the range of 50 nm to 50 µm;
- the air permeability of the third layer is in the range of 100 to 1,500 l/(m²s);
- the basis weight of the third layer is in the range of 0.001 to 5 g/m²;
- the media is an air filter media;
- the total thickness of the media is in the range of 1.2 to 5.5 mm;
- the total air permeability of the media is in the range of 50 to 1,400 l/(m²s);
- the total basis weight of the media is in the range of 50 to 290 g/m²;
- the total filtration efficiency of the media is in the ePM2.5 class or better, preferably in the ePM1 class;
- a fourth layer arranged between the first layer and the third layer;
- the fourth layer is a pre-filter layer;
- the fourth layer is a melt-blown layer;
- the fourth layer comprises at least one of polypropylene fibers (PP fibers), polycarbonate fibers (PC fibers), polyester fibers (such as: PET fibers; and/or polybutylene terephthalate fibers, PBT fibers), and PA fibers;
- the thickness of the fourth layer is in the range of 0.1 to 2.0 mm, preferably 0.3 to 1.5 mm, more preferably 0.4 to 1.2 mm;
- the air permeability of the fourth layer is in the range of 500 to 4,000 l/(m²s), preferably 800 to 3,000 l/(m²s), more preferably 1,500 to 2,300 l/(m²s);
- the basis weight of the fourth layer is in the range of 10 to 100 g/m², preferably 15 to 80 g/m², more preferably 20 to 50 g/m²;
- the fourth layer is an electrostatically charged layer;
- the second layer is a carrier layer;
- the second layer is a wet-laid nonwoven layer or a dry-laid nonwoven layer, preferably a dry-laid nonwoven layer, more preferably a spunbond layer;
- the wet-laid nonwoven layer or the dry-laid nonwoven layer comprises cellulose fibers, synthetic fibers or a mixture thereof;
- the spunbond layer comprises at least one of PP fibers, PET fibers, PBT fibers, polyethylene fibers (PE fibers) and PA fibers;
- the second layer can comprise bi-component fibers;
- the bi-component fibers comprise a first component and a second component;
- the first component comprises at least one polymer selected from PP, PET, PBT, PE and PA;
- the second component comprises at least one polymer selected from PP, CoPP, PET, CoPET, PBT, CoPBT, PE, CoPE, PA and CoPA;
- the bi-component fibers are at least one of the following: core-and-sheath fibers, side-by-side fibers, tipped fibers, and islands-in-the-sea fibers;
- the thickness of the second layer is in the range of 0.1 to 1 mm;
- the air permeability of the second layer is in the range of 2,000 to 10,000 l/(m²s);
- the basis weight of the second layer is in the range of 10 to 200 g/m².

One preferred embodiment of the present disclosure is a non-woven air filter media comprising:
- a carded and electrostatically charged pre-filter layer comprising a blend of acrylic fibers and polypropylene fibers;
- a carrier layer; and
- a filter layer arranged between the pre-filter layer and the carrier layer, the filter layer being made of electrospun nanofibers.

Another preferred embodiment of the present disclosure is a non-woven air filter media comprising:
- a carded and electrostatically charged first pre-filter layer comprising a blend of acrylic fibers and polypropylene fibers;
- a carrier layer;
- a filter layer arranged between the first pre-filter layer and the carrier layer, the filter layer being made of electrospun nanofibers; and
- a second pre-filter layer arranged between the first pre-filter layer and the filter layer, the second pre-filter layer being an electrostatically charged melt-blown layer.

The present disclosure also pertains to air filters in particular to a bag filter for a heating, ventilation and air conditioning system, related HVAC systems as well as to cabin air filters which comprises a non-woven filter media as previously defined. Depending on the specific application the filter media can be pleated.

### Brief Description of Drawings

Other features, details and advantages will be shown in the following detailed description and on the figures, wherein:
**Fig. 1**
   [Fig. 1] is a schematic cross-section of a first embodiment of a non-woven filter media according to the present disclosure.
**Fig. 2**
   [Fig. 2] is a schematic cross-section of a second embodiment of a non-woven filter media according to the present disclosure.
**Fig. 3**

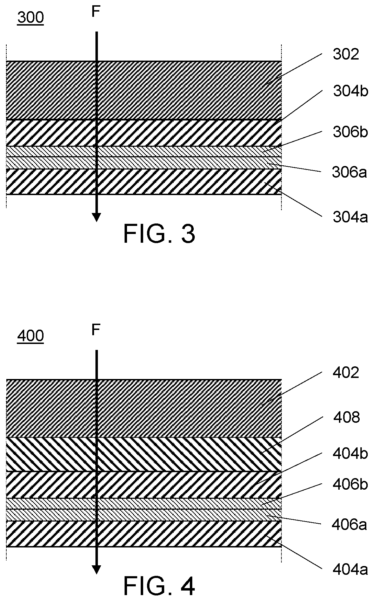

   [Fig. 3] is a schematic cross-section of a third embodiment of a non-woven filter media according to the present disclosure.
**Fig. 4**
   [Fig. 4] is a schematic cross-section of a fourth embodiment of a non-woven filter media according to the present disclosure.
**Fig. 5**

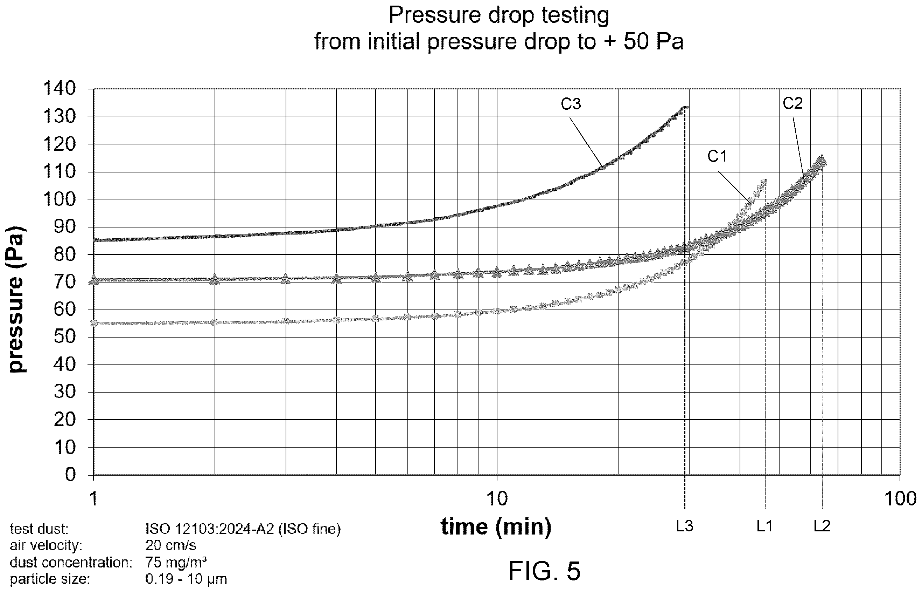

   [Fig. 5] is a graph of pressure vs. time for two exemplary filter media of the present disclosure and a comparative example.

### Description of Embodiments

### Definitions

The following definitions are provided in the context of the present disclosure:
The thickness of a layer or media is the distance between both opposite surfaces of the layer or media. The thickness is determined according to ISO Standard 9073-2:1995. The test area is 2500 mm² (56.42 mm diameter) with a test plate pressure of 0.5 kPa.

The air permeability of a layer or media is the measured airflow through a specified area of the layer or media at a specified pressure drop. The air permeability is determined according to ISO Standard 9237:1995 at a pressure difference of 200 Pa with a sample size of 20 cm². It is indicated in liters per square meter and second (l/(m²s)). Any suitable instrument can be used as for example a Textest FX3300 instrument.

The basis weight or grammage of a layer or media is its mass per unit area and is measured according to DIN EN Standard 29073:1992. It is indicated in grams per square meter (g/m²).

The dust holding capacity of a layer or of the filter media is measured according to DIN Standard 71460-1. The test conditions involve an incoming flow volume of 20 cm/s, a filter area of 100 cm², a final pressure of +50 Pa, and a mass concentration of 75 g/m³. ISO 12103:2024-A2 (ISO fine) is used as the test dust.

The initial pressure drop of a layer or of the filter media is measured according to DIN Standard 71460-1 at a flow rate of 20 cm/s.

Unless otherwise stated, the filtration efficiency of a layer or of the filter media is measured according to ISO Standard 16890:2016. This standard is based on tests using aerosols (DEHS, KCl) with a particle size of 0.3 to 1 µm (DEHS) and 1-10 µm (KCl) and classifies the filter media based on the results for particle sizes PM1, PM2.5 and PM10.

Unless otherwise stated, the fiber diameter is measured using a scanning electron microscope using automated software (e.g., using a scanning electron microscope available from Phenom Fei with the associated software Fibermetric V2.1). Measurements that capture crossing points of multiple fibers (and therefore do not represent the fiber diameter) are removed manually. Fiber bundles are generally evaluated as one fiber. Measurements are determined by sampling five points across the width of a nonwoven fabric (e.g., 1.8 m). Measurements are taken at random based on the SEM image recorded with 1000-fold magnification. The average fiber diameter at each location is evaluated by the software and an average of the five values is taken to determine the average fiber diameter of the nonwoven fabric. At least 500 fibers are measured.

The terms "top surface/layer" and "bottom surface/layer" refer to the position of the filter media when it sits on its surface through which filtered air is intended to come out of the filter media. As such, they can also be referred respectively to "inlet surface/layer" and "outlet surface/layer".

### Embodiments

The different non-woven filter media described in the following find a preferred application as part of an air filter such as a bag filter as used e.g. in heating, ventilation & air conditioning.

Reference is now made to figure 1, which shows a cross-section of a non-woven filter media 100 according to a first embodiment of the present disclosure.

The filter media 100 of figure 1 has an outer top surface 101 and an outer bottom surface 103. Preferably, the filter media 100 is an air filter media. In this case, the filter media 100 is designed for dust-laden air to enter via the outer top surface 101, cross the filter media 100 and exit as filtered air via the outer bottom surface 103, as indicated by the arrow F in figure 1.

The filter media 100 comprises, and may only consist of, three layers, namely a first layer 102, a second layer 104 and a third layer 106. The first layer 102 is a top layer, the second layer 104 is a bottom layer and the third layer 106 is an intermediate layer. Accordingly, the third layer 106 is arranged between the first layer 102 and the second layer 104. In the shown embodiment, the second layer 104 is in contact with the third layer 106, the third layer 106 is in contact with the first layer 102 and the second layer 104, and the first layer 102 is in contact with the third layer 106.

Alternatively, the second layer is the intermediate layer. Accordingly, the second layer is arranged between the first layer and the third layer, i.e. the third layer is in contact with the second layer, the second layer is in contact with the first layer and the third layer, and the first layer is in contact with the second layer.

The layers of the filter medium can be adhered together by through-air bonding, heat treatment, ultrasonic welding, glueing, hydro entangling, calandering or without any bonding. Preferably the different layers are attached to each other by any suitable adhesive, for example a polyurethane or hot-melt-based adhesive.

The total thickness T of the filter media 100, cf. figure 1, may be in the range of 1.2 to 5.5 mm, in particular in the range of 1.6 to 3.6 mm. A preferred value for the total thickness T is 1.95 mm.

The total air permeability of the filter media 100 may be in the range of 50 to 1,400 l/(m²s), preferably 100 to 1,200 l/(m²s), more preferably in the range of 200 to 1,000 l/(m²s). A preferred value for the total air permeability is 723 l/(m²s).

The total basis weight of the filter media 100 may be in the range of 50 to 290 g/m², in particular in the range of 80 to 215 g/m². A preferred value for the total basis weight is 135 g/m².

The total filtration efficiency of the filter media 100 may be, according to EN ISO 16890-1 :2016, in the ePM2.5 class or better, preferably in the ePM1 class. Most preferably, the total filtration efficiency is in the ePM1[65%] category.

Turning now to the first layer, the first layer 102 comprises a blend of acrylic fibers and polypropylene (PP) fibers. The acrylic fibers to PP fibers mass ratio of the blend may be 40:60 to 60:40, preferably 45:55 to 55:45, for example 50:50. Preferably, the acrylic fibers are polyacrylonitrile (PAN) fibers. The blend may comprise a charge additive, which is preferably present in the PP fibers. The blend may comprise a spin finish, which is preferably present on the acrylic fibers.

In general, the linear density of the fibers of the first layer 102 may be 1.2 to 3.5 dtex, preferably 1.4 to 3.3 dtex. The linear density of the PP fibers is more preferably 1.2 to 3 dtex, more preferably 1.4 to 2.8 dtex. In some cases, it can be 1.4 to 2.5 dtex, while in other cases it can be 2.5 to 2.8 dtex. The linear density of the acrylic fibers is more preferably 1.2 to 3.5 dtex, more preferably 1.4 to 3.3 dtex In some cases, it can be 1.4 to 2.2 dtex, while in other cases it can be 1.4 to 2.2 dtex or 2.2 to 3.3 dtex.

In general, the length of the fibers may be 40 to 70 mm, preferably 45 to 65 mm. The length of the PP fibers is preferably 45 to 55 mm while the length of the acrylic fibers is preferably 45 to 65 mm.

The shape of the cross-section of the fibers may be very diverse such as round shape, kidney-bean shape or dog-bone shape. A mixture of fibers with cross-sections with different shapes is also possible. For example, the PP fibers preferably all have a round shaped cross-section or part of the PP fibers have a round shaped cross-section and the remaining part a dog-bone shaped cross-section. Regarding the acrylic fibers, they preferably all have a dog-bone shaped cross-section or part of the acrylic fibers have a dog-bone-shaped cross-section the remaining part have a kidney-bean shaped cross-section.

The first layer 102 may also have a functional layer comprising the blend of acrylic fibers and PP fibers and a carrier layer which will be named supporting layer in the following. In such case, the features mentioned for the first layer 102 above apply to the functional layer. This supporting layer can be arranged between the functional layer and the third layer 106. Alternatively, the functional layer is arranged between the supporting layer and the third layer 106. Also, this supporting layer may comprise polymeric fibers such as PP fibers and/or may be a spunbond layer which may comprise at least one of PP fibers, PET fibers, PBT fibers, PE fibers and PA fibers.

An exemplary detailed composition of the first layer 102 is the following:
- 45 to 55% by weight of PP fibers, which are 2.4 to 2.9dtex fibers and have an average length of 45 to 55 mm, the fibers are finish-free, have 2 to 3.5 weight.% charge additive inside and have a round-shaped cross-section;
- 45 to 55% by weight of wetspun acrylic fibers, which are 2.4 to 3.4dtex fibers and have an average length of 45 to 65 mm, the fibers have a spin finish of 0.1 to 0.35 weight.% of carnauba wax based chemical, the spin finish acts as a charge enhancing and charge retention agent, and the fibers have a kidney-bean-shaped cross-section; and
wherein the sum of PP fibers and wetspun acrylic fibers makes 100%.

This latter composition is the composition of the functional layer of the Alphastar^{™}, an electrostatic nonwoven product available from the company MATIV Holding Inc. Thus, in one embodiment, the first layer 102 may be made from Alphastar^{™}. A preferred Alphastar^{™} product is the Alphastar^{™} AWS1100 or the Alphastar^{™} AWS1301.

The first layer 102, or the functional layer if a supporting layer is provided, may be carded and/or electrostatically charged. Preferably, the first layer 102 is a pre-filter layer.

The thickness t1 of the first layer 102 (with or without the supporting layer), cf. figure 1, may be in the range of 1 to 2.5 mm, preferably in the range of 1.4 to 2.0 mm. A preferred value for this thickness is 1.9 mm.

The air permeability of the first layer 102 (with or without the supporting layer) may be in the range of 2,000 to 4,000 l/(m²s), preferably in the range of 2,500 to 3,200 l/(m²s). A preferred value for this air permeability is 2,600 l/(m²s).

The basis weight of the first layer 102 (with or without the supporting layer) may be in the range of 30 to 200 g/m², preferably 50 to 110 g/m², more preferably 75 to 100 g/m². A preferred value for this basis weight is 80 or 95 g/m².

Turning now to the second layer 104, this layer preferably is a carrier layer. As such, it provides stability and support for the other two layers 102, 106.

The second layer 104 may be a dry-laid nonwoven, for example a spunbond or carded web, or a wet-laid nonwoven. The wet-laid nonwoven layer or the dry-laid nonwoven layer may comprise cellulose fibers, synthetic fibers or a mixture thereof. When the second layer 104 is a spunbond layer, this latter may comprise at least one of PP fibers, PET fibers, PBT fibers, PE fibers and PA fibers.

The second layer 104 may include mono- and/or bi-component fibers.

The bi-component fibers may comprise a first component and a second component. The first component comprises at least one polymer selected from PP, PET, PBT, PE and PA. The second component comprises at least one polymer selected from PP, Co-PP, PET, CoPET, PBT, CoPBT, PE, CoPE, PA and CoPA. Preferably, the bi-component fibers are at least one of the following: core-and-sheath fibers, side-by-side fibers, tipped fibers, and islands-in-the-sea fibers.

Suitable polymers for the fibers of the second layer 104 are for example polypropylene, polyethylene, polycarbonate, polyethylene terephthalate, polybutylene terephthalate, polyamide and polyurethane or mixtures thereof.

The fibers of the second layer 104 may be bonded to each other by heat, calandering, needlepunching or hydroentangling.

The thickness t2 of the second layer 104, cf. figure 1, may be in the range of 0.1 to 1 mm.

The air permeability of the second layer 104 may be in the range of 2,000 to 10,000 l/(m²s).

The basis weight of the second layer 104 may be in the range of 10 to 200 g/m².

Turning now to the third layer 106, this layer is made of electrospun nanofibers.

The nanofiber layer 106 preferably is a filter layer. When the direction of air flow F through the filter media 100, cf. the arrow in figure 1, is taken as a reference, the third layer 106 comes after, i.e., downstream of the first layer 102. In this configuration, the first layer 102 acts as a pre-filter layer that captures coarse dust from the traversing air F before the traversing air F reaches the nanofiber layer 106. The nanofiber layer 106 then captures the fine dust that remains in the traversing air F. Accordingly, the pre-filter layer 102 prevents coarse dust from reaching the nanofiber layer 106 so that the latter can operate under good conditions and keep filtering for longer.

The combination of the pre-filter layer 102 and the nanofiber filter layer 106 is particularly advantageous in that it combines the advantage of a nanofiber layer, namely a high filtration efficiency at a low pressure drop, with the advantage of an acrylic and PP fiber layer, namely a high dust holding capacity. Typically, the dust holding capacity is at least 35 g/m², preferably at least 40 g/m², still preferably at least 45 g/m².

Preferably, the nanofibers of the third layer 106 are at least one of the following: polyamide, PA, fibers; polyester fibers, such as polyethylene terephthalate, PET, fibers; polyvinyl chloride, PVC, fibers; polyolefin fibers; polyvinyl alcohol, PVAL, fibers; polyvinylidene fluoride fibers; and polyurethane, PUR, fibers.

The diameter of the nanofibers typically is less than 800 nm. A preferred range for the diameter of the nanofibers is 50 to 300 nm.

The thickness t3 of the third layer 106, cf. figure 1, may be in the range of 50 nm to 50 µm, preferably in the range of 100 nm to 5 µm.

The air permeability of the third layer 106 may be in the range of 100 to 1,500 l/(m²s), preferably in the range of 500 to 1,200 l/(m²s). A preferred value for this air permeability is 950 l/(m²s).

The basis weight of the third layer 106 may be in the range of 0.001 to 5 g/m², preferably in the range of 0.1 to 2 g/m².

In a variant, the filter media 100 may further comprise an adsorption layer (not shown) . Such an adsorption layer can be used to equip the filter media 100 and produce a combination filter. The adsorption layer can be provided anywhere in the filter media 100, but is preferably attached to the prefilter. The adsorption layer can be attached upstream or downstream of the filter media. As a result of this design, not only particles, but also unpleasant odours can be adsorbed.

The adsorption layer may present saturated and/or unsaturated activated carbon particles. For example, the filter media 100 may present an adsorption layer made of activated carbon, zeolites or ion exchangers. As a result, noxious gases, such as hydrocarbons, SO₂, NOx or the like can be adsorbed.

The activated carbon is glued with any to the selected layer by any suitable glue.

With reference to figure 2, we will now describe a second embodiment 200 of a non-woven filter media according to the present disclosure. The following description of the second embodiment is limited to the differences of the second embodiment compared to the first embodiment. A description of the elements comparable to the first embodiment is omitted. For these comparable elements, reference is made to the preceding description of the first embodiment.

In comparison to the filter media 100 of figure 1, the filter media 200 of figure 2 has an additional fourth layer 208, which makes it a four-layered filter media. The additional fourth layer 208 is arranged between the first layer 202 and the third layer 206. In the shown example, the second layer 204 is in contact with the third layer 206, the third layer 206 is in contact with the second layer 204 and the fourth layer 208, the fourth layer 208 is in contact with the third layer 206 and the first layer 202, and the first layer 202 is in contact with the fourth layer 208.

Preferably, the fourth layer 208 acts as an additional pre-filter layer, in addition to the first pre-filter layer 202.

The fourth layer 208 may be a melt-blown layer. It may comprise at least one of PP fibers, PC fibers, polyester fibers (such as: PET fibers; and/or PBT fibers), and PA fibers. This may also be electrostatically charged.

In one embodiment, the fourth layer 208 is a melt-blown layer comprising fibers made from a polymer material, wherein the polymer material comprises at least one thermoplastic resin, and at least one of a charge adjuvant and/or a nucleating agent. For further details about suitable charge adjuvants and nucleating agents as well as suitable amounts, reference is made to document WO 2022/101203 A1, whose corresponding disclosure is incorporated herein by reference. In preferred embodiments the melt-blown layer comprises at least one of a charge adjuvant and a nucleating agent as disclosed in WO 2022/101203 A1.

The thickness t4 of the fourth layer 208, cf. figure 2, may be in the range of 0.1 to 2.0 mm, preferably 0.3 to 1.5 mm, more preferably 0.4 to 1.2 mm. A preferred value for this thickness is 0.45 mm.

The air permeability of the fourth layer 208 may be in the range of 500 to 4,000 l/(m²s), preferably 800 to 3,000 l/(m²s), more preferably 1,500 to 2,300 l/(m²s). A preferred value for this air permeability is 2,000 l/(m²s).

The basis weight of the fourth layer 208 may be in the range of 10 to 100 g/m², preferably 15 to 80 g/m², more preferably 20 to 50 g/m². A preferred value for this basis weight is 24 g/m².

The total thickness T of the filter media 200, cf. figure 2, may be in the range of 1.2 to 5.5 mm. A preferred value for the total thickness T is 1.93 mm.

The total air permeability of the filter media 200 may be in the range of 50 to 1,400 l/(m²s). A preferred value for the total air permeability is 528 l/(m²s).

The total basis weight of the filter media 200 may be in the range of 50 to 290 g/m². A preferred value for the total basis weight is 152 g/m².

The total filtration efficiency of the filter media 200 may be, according to EN ISO 16890-1 :2016, in the ePM2.5 class or better, preferably in the ePM1 class. Most preferably, the total filtration efficiency is in the ePM1[75%] category.

With reference to figure 3, we will now describe a third embodiment 300 of a non-woven filter media according to the present disclosure. The following description of the third embodiment is limited to the differences of the third embodiment compared to the first embodiment. A description of the elements comparable to the first embodiment is omitted. For these comparable elements, reference is made to the preceding description of the first embodiment.

In comparison to the filter media 100 of figure 1, the filter media 300 of figure 3 has two additional layers, which makes it a five-layered filter media. That is, instead of one nanofiber layer 106, there are two nanofiber layers 306a, 306b. There are also two carrier layers 304a, 304b instead of a single carrier layer 104. The two nanofiber layers can be identical or different and the same applies to the carrier layers. The features provided above regarding the composition of the third layer are independently applicable to both nanofiber layers 306a, 306b. The features provided above regarding the properties and dimensions of the third layer are applicable to the combination of both nanofiber layers 306a, 306b. The features provided above regarding the composition of the second layer are independently applicable to both carrier layers 304a, 304b. The features provided above regarding the properties and dimensions of the fourth layer are applicable to the combination of both carrier layers 304a, 304b.

The two nanofiber layers 306a, 306b are next to and in contact with each other. The additional carrier layer 304b is arranged between the first layer 302 and the additional nanofiber layer 306b.

Alternatively, the following layer structures can be contemplated:
- first layer/first nanofiber layer/first carrier layer/second nanofiber layer/second carrier layer;
- first layer/first nanofiber layer/first carrier layer/second carrier layer/second nanofiber layer; and
- first layer/first carrier layer/first nanofiber layer/second carrier layer/second nanofiber layer.

With reference to figure 4, we will now describe a fourth embodiment 400 of a non-woven filter media according to the present disclosure. The following description of the fourth embodiment is limited to the differences of the fourth embodiment compared to the third embodiment. A description of the elements comparable to the third embodiment is omitted. For these comparable elements, reference is made to the preceding description of the third embodiment.

The filter media 400 of figure 4 has a total of six layers. Compared to the filter media 300 of figure 3, it has an additional pre-filter layer 408.

Preferably, the difference between the filter media 400 of figure 4 and the filter media 300 of figure 3 is the same as the difference between the filter media 200 of figure 2 and the filter media 100 of figure 1. That is, the additional sixth layer 408 of the filter media 400 of figure 4 is the same as the additional fourth layer 208 of the filter media 200 of figure 2.

The additional sixth layer 408 is arranged between the first layer 402 and the second carrier layer 404b. Preferably, the additional sixth layer 408 is a melt-blown layer. It may comprise at least one of PP fibers, PC fibers, polyester fibers (such as: PET fibers; and/or PBT fibers), and PA fibers. It may also be electrostatically charged.

### Examples

In the following, we present two concrete examples of non-woven filter media according to the present disclosure.

### Example 1 - filter media with two functional layers

This first example of a filter media according to the present disclosure has a layer composition corresponding to Fig. 1.

The pre-filter layer 102 is made of the material Alphastar^{™} Pro AWS1301, which is available from the company MATIV Holding Inc. The carrier layer 104 is a spunbond layer made of polypropylene fibers. The filter layer 106 is made of polyamide nanofibers. The filter layer 106 was obtained by electrospinning a polyamide solution onto the carrier layer 104, thereby depositing polyamide nanofibers onto the carrier layer 104.

### Example 2 - filter media with three functional layers

This second example of a filter media according to the present disclosure has a layer composition corresponding to Fig. 2.

The first pre-filter layer 202 is made of the material Alphastar^{™} Pro AWS1301, which is available from the company MATIV Holding Inc.. The carrier layer 204 is a spunbond layer made of polypropylene fibers. The filter layer 206 is made of polyamide nanofibers. The filter layer 206 was obtained by electrospinning a polyamide solution onto the carrier layer 204, thereby depositing polyamide nanofibers onto the carrier layer 204. The second pre-filter layer 208 is an electrostatically charged melt-blown layer made of polypropylene fibers (the polypropylene mixture comprising 1 wt% of a charge adjuvant and 0,1 wt% of a nucleating based on the total weight of the poypropylene).

### Comparative example - NanoWave^{®} filter media of ePM1[65%] class

The filter media NanoWave^{®} sold by Hollingsworth & Vose^{®} is used as a comparative example since it is commonly viewed as an efficient filter of good quality currently available on the market. More precisely, a PFN bag filter made of NanoWave^{®} filter media of filtration efficiency class ePM1[65%] was purchased from TROX GmbH (www.trox.de).

### Test results

The following table shows the measurement results obtained for the main characteristics of the filter media according to example 1 and example 2, and according to the comparative example:

| | **Example 1** | **Example 2** | **Comparative example** |
|---|---|---|---|
| Initial pressure drop (Pa) | 54 | 64 | 83 |
| *DHC @ +50 Pa (g*/*m²)* | *47* | *65* | *30* |
| Basis weight (g/m²) | 135 | 152 | 150 |
| Thickness @ p=0.5 kPa (mm) | 1.95 | 1.93 | 3,2 |
| Filtration efficiency | ePM1[65%] | ePM1 [75%] | ePM1 [65%] |

As apparent from the above table, the filter media according to the two examples indeed combine a very good filtration efficiency, which is at least as good as the comparative example, with a low initial pressure drop and a good dust holding capacity (DHC) while being lighter and thinner. Further, in the two examples, the values for the initial pressure drop and the DHC are considerably better than the corresponding values of the comparative example.

Figure 5 is a graph showing the results of pressure drop testing for the filter media of the two examples and the comparative example. In this test, each tested filter media is subjected to the same air flow laden with the same standard test dust. The parameters of the test are given in figure 5 (test dust used: ISO 12103-A2:2024 (ISO fine); air velocity: 20 cm/s; dust concentration: 75 mg/m³; particle size: 0.19-10 µm). While the dust-laden air flows through the tested filter media, the pressure drop across the tested filter media is measured and recorded once per minute until the pressure drop has increased by 50 Pa from the initial pressure drop. At this point the measurement is halted.

Curve C1 in figure 5 shows the results for example 1, curve C2 the results for example 2, and curve C3 the results for the comparative example. Figure 5 illustrates that the test end L3 of the filter media of the comparative example is slightly lower than 20 minutes, whereas the test ends L1, L2 of the filter media of the two examples are considerably later, namely at around 46 minutes for example 1 and around 64 minutes for example 2.

It is apparent that the lifespan of the filter media of the two examples will be higher due to the higher DHC and slower pressure drop increase over the measurement time. Also, the energy rating will be better.

### Conclusion

The non-woven filter media disclosed herein combine a good filtration efficiency with a low pressure drop and a high dirt holding capacity. They are thus suitable for high-end filtration applications. On top of that, the manufacturing of the disclosed non-woven filter media is comparatively simple, which makes them inexpensive.

## Claims

1. A non-woven filter media (100) comprising:
a. a first layer (102) comprising a blend of acrylic fibers and polypropylene, PP, fibers;
b. a second layer (104); and
c. a third layer (106) made of electrospun nanofibers.

2. The media (100) according to the previous claims, wherein the third layer (106) is arranged between the first layer (102) and the second layer (104).

3. The media (100) according to any one of the previous claims, wherein the first layer (102) is a carded layer and/or electrostatically charged layer.

4. The media (100) according to any one of the previous claims, wherein the first layer (102) comprises a functional layer and a supporting layer.

5. The media (100) according to any one of the previous claims, wherein the first layer (102) is a pre-filter layer.

6. The media (100) according to any one of the previous claims, wherein the blend further comprises a charge additive, preferably the charge additive is present in the PP fibers.

7. The media (100) according to any one of the previous claims, wherein the blend further comprises a spin finish, preferably the spin finish is present on the acrylic fibers.

8. The media (100) according to any one of the previous claims, wherein at least a part of the acrylic fibers has a dog-bone-shaped cross-section and/or at least a part of the acrylic fibers has a kidney-bean-shaped cross-section.

9. The media (100) according to any one of the previous claims, wherein the nanofibers have a diameter of 800 nm or less.

10. The media (100) according to any one of the previous claims, wherein the media is an air filter media.

11. The media (100) according to any one of the previous claims, wherein the total thickness (T) of the media is in the range of 1.2 to 5.5 mm.

12. The media (100) according to any one of the previous claims, wherein the total filtration efficiency of the media is in the ePM2.5 class or better, preferably in the ePM1 class.

13. The media (100) according to any one of the previous claims, further comprising an adsorption layer.

14. The media (100) according to any one of the previous claims, further comprising a melt-blown layer.

15. A filter element comprising the filter media (100) of any one of the previous claims.

16. A bag filter for a heating, ventilation & air conditioning system, the bag filter comprising the filter media (100) of any one of the previous claims.
